# FASCICULE DE BREVET EUROPEEN

(11) **EP 3 938 258 B1**
(45) Date de publication et mention de la délivrance du brevet: **12.07.2023**
(21) Numéro de dépôt: 20725891.4
(22) Date de dépôt: 12.03.2020
(51) Int. Cl.: B60T 13/68

(54) **SYSTÈME DE FREINAGE FERROVIAIRE COMPORTANT UN DISPOSITIF AFFICHEUR D'UN ÉTAT D'UN FREIN DE SERVICE ET/OU D'UN ÉTAT D'UN FREIN DE PARKING ET VÉHICULE FERROVIAIRE POURVU D'UN TEL SYSTÈME**
BREMSSYSTEM FÜR SCHIENENFAHRZEUGE AUSGESTATTET MIT EINEM ANZEIGEGERÄT ZUM ANZEIGEN DES ZUSTANDES EINER BRETRIEBS- ODER PARKBREMSE UND SCHIENENFAHRZEUG AUSGESTATTET MIT EINEM SOLCHEN BREMSSYSTEM
BRAKING SYSTEM FOR RAILWAY VEHICLE PROVIDED WITH A DISPLA SHOWING THE STATRE OF A SERVICE OR PARKING BRAKE AND VEHICLE PROVIDED WITH SAID BRAKING SYSTEM

(30) Priorité: 14.03.2019 FR 1902641
(43) Date de publication de la demande: 19.01.2022
(73) Titulaire: Faiveley Transport Amiens, 80000 Amiens (FR)
(72) Inventeur: LESAGE, Stéphane, 80000 AMIENS (FR); FROMONT, Vincent, 80340 PROYART (FR)
(74) Mandataire: Santarelli
(86) Numéro de dépôt international: PCT/FR2020/050525
(87) Numéro de publication internationale: WO 2020/183114

(56) Documents cités:
- EP-A1- 2 505 451
- WO-A1-2004/080775
- WO-A1-2017/149244
- WO-A1-2017/151854
- CA-A1- 3 015 705
- US-A1- 2005 280 310

## Description

### Domaine technique de l'invention

L'invention concerne le domaine du freinage des véhicules ferroviaires. Elle concerne plus particulièrement un système de freinage pour véhicule ferroviaire, comportant un dispositif afficheur prévu pour afficher un état d'un frein de service et/ou un état d'un frein de parking dudit système de freinage. Elle concerne également les véhicules ferroviaires comportant un tel système.

### Etat de la technique

Les véhicules ferroviaires sont généralement équipés de cylindres de frein de service comportant un piston mobile sous l'effet d'un fluide sous pression, le déplacement de ce piston entraînant une action de freinage telle que le serrage d'un disque de frein entre deux garnitures, ou la pression directe d'une semelle contre une roue du véhicule.

Ces cylindres de frein comportent également généralement un actionneur de parking ou de secours qui est activé en cas de perte de pression du fluide sous pression et/ou en cas de vidange volontaire ou de fuite du système pneumatique. Cet actionneur, appelé aussi frein de parking, permet d'assurer le freinage grâce à la force d'un ou plusieurs ressorts se substituant à la force du fluide. Une fois ce frein de parking activé, le frein reste serré en permanence.

On connaît de la demande de brevet européen EP 2 154 040 un système de freinage ferroviaire pourvu notamment d'un actionneur de frein de parking accouplé à un cylindre de frein de service ferroviaire. Un tel frein de parking permet d'assurer le freinage grâce à la force d'un ressort se substituant à la force du fluide.

On connaît aussi des demandes EP 2 826 684 et WO 2017/149244 un système de freinage ferroviaire pourvu notamment d'un frein de parking disposé dans le cylindre de frein de service et comportant un dispositif de blocage configuré pour agir sur une tige du piston de freinage de frein de service, et un dispositif de commande du dispositif de blocage. Le dispositif de blocage et le dispositif de commande sont configurés pour que, lorsque le piston de freinage est dans une position de freinage de service et que le frein de parking est en configuration de travail, le dispositif de commande agit sur ledit dispositif de blocage jusqu'à ce que ce dernier immobilise la tige de piston de sorte à bloquer le piston de freinage dans sa position de freinage de service, et lorsque le frein de parking est en configuration de repos, le dispositif de commande agit sur le dispositif de blocage jusqu'à ce que ce dernier libère la tige de piston de sorte à débloquer le piston de freinage de sa position de freinage de service.

Ces systèmes de freinage sont montés sur le véhicule ferroviaire, pour être en contact avec les disques de frein ou bien les roues. En particulier, ils peuvent être assujettis mécaniquement sur des bogies, ou bien sur les essieux fixés sur les bogies, ou encore sur d'autres dispositifs du type moteur d'entraînement ou boîte de vitesses montés aussi sur les bogies.

Il existe classiquement des dispositifs afficheur montés sur un côté du véhicule ferroviaire, par exemple directement sur des voitures du véhicule.

Ces dispositifs afficheur sont prévus pour indiquer un état dans lequel se trouve le système de freinage, et en particulier son frein de service et/ou son frein de parking. Il peut par exemple s'agir d'un état dit serré lorsque le système de freinage ferroviaire immobilise le véhicule ferroviaire, ou bien d'un état dit desserré lorsque le système de freinage ferroviaire n'immobilise pas ce véhicule.

De tels dispositifs afficheurs peuvent comporter des mécanismes à piston qui, lorsqu'ils sont alimentés par un agent de pression pneumatique, permettent d'afficher un état serré ou desserré du système de freinage et, lorsqu'ils ne sont pas alimentés par un agent de pression pneumatique, permettent d'afficher un deuxième état desserré ou serré du système de freinage.

L'affichage de ces états peut se faire simplement par le mouvement d'un organe mobile du mécanisme à piston devant une fenêtre de visualisation du dispositif afficheur.

Il arrive cependant que ces dispositifs afficheur indiquent un état intermédiaire entre l'état serré et l'état desserré, par exemple lorsque l'organe mobile du mécanisme à piston ne se déplace pas suffisamment entre une première position où il indique l'état serré et une deuxième position où il indique l'état desserré. Ceci peut créer un doute quant à l'état effectif du système de freinage ferroviaire.

### Exposé de l'invention

L'invention concerne un système de freinage pour véhicule ferroviaire, comportant un dispositif afficheur prévu pour indiquer un état du système de freinage ferroviaire, tout en étant simple, commode et économique.

L'invention a ainsi pour objet, sous un premier aspect, un système de freinage ferroviaire comportant un frein de service et/ou un frein de parking, un réseau de conduites pneumatiques prévu pour alimenter, via au moins un agent de pression pneumatique, ledit frein de service et/ou ledit frein de parking pour les mettre dans un état dit serré ou dans un état dit desserré, et un dispositif afficheur dudit état serré et/ou dudit état desserré dudit frein de service et/ou dudit frein de parking ; caractérisé en ce que ledit dispositif afficheur comporte au moins une entrée pneumatique raccordée audit frein de service et/ou audit frein de parking via ledit réseau de conduites pneumatiques, au moins une entrée électrique, au moins un organe de déclenchement électropneumatique raccordé à ladite au moins une entrée pneumatique et à ladite au moins une entrée électrique, et au moins un organe d'affichage électronique raccordé audit organe de déclenchement électropneumatique et commandé par ce dernier pour afficher ledit état serré ou ledit état desserré dudit frein de service et/ou dudit frein de parking.

Le dispositif afficheur du système de freinage ferroviaire est particulièrement fiable et précis en ce qu'il reçoit directement une information représentative d'une valeur de pression dans le frein de service et/ou dans le frein de parking en y étant raccordé pneumatiquement via le réseau de conduites, qu'il transforme cette information pneumatique en une information électrique et qu'il commande l'organe d'affichage électronique avec l'information électrique. En effet, la réception de l'information pneumatique directement issue du frein de service et/ou du frein de parking rend compte directement de l'état serré et/ou desserré de manière fiable, tandis que l'affichage électronique de l'état serré ou desserré détecté est particulièrement précis.

Un tel système de freinage ferroviaire équipe un véhicule ferroviaire à freins à garnitures ou à semelles. L'état serré peut correspondre à une configuration où le frein de service et/ou le frein de parking agissent sur les freins à garnitures ou à semelles du véhicule pour immobiliser ce dernier, tandis que l'état desserré peut correspondre à une configuration où le frein de service et/ou le frein de parking laissent libre les freins à garnitures ou à semelles du véhicule permettant ainsi le déplacement de ce dernier.

On notera que le système de freinage ferroviaire peut par exemple comporter une timonerie de freinage configurée pour agir sur au moins un dit frein à garniture ou à semelle d'un véhicule ferroviaire, un frein de service comportant un piston de freinage mobile par rapport audit corps pour agir sur ladite timonerie de freinage et délimitant avec ledit corps la chambre de pression de frein de service configurée pour être alimentée par une première source d'agent de pression pneumatique pour mettre ledit piston de freinage dans une position de freinage de service, le frein de parking peut être configuré pour agir sur ledit piston de freinage dudit frein de service et admet une configuration de travail et une configuration de repos. Ledit frein de parking peut comporter un dispositif de blocage mobile par rapport audit corps pour agir sur ledit piston de freinage et peut admettre une première position et une seconde position dans laquelle ledit dispositif de blocage est configuré pour immobiliser ledit piston de freinage en position de freinage de service, ledit frein de parking étant alors en configuration de travail. Ledit frein de parking peut comporter un dispositif de commande mobile par rapport audit corps et admettant une position de verrouillage dans laquelle ledit dispositif de commande est configuré pour maintenir ledit dispositif de blocage dans sa seconde position. Ledit système de freinage ferroviaire peut être configuré pour alimenter la chambre de pression de frein de service avec un autre agent de pression pneumatique dont la valeur de pression est déterminée, de sorte à appliquer un effort de freinage déterminé lorsque ledit frein de parking est en configuration de travail.

Des caractéristiques préférées, simples, commodes et économiques du système selon l'invention sont présentées ci-après.

Ledit au moins un organe de déclenchement électropneumatique peut être configuré pour recevoir une information représentative d'une valeur de pression pneumatique via ladite au moins une entrée pneumatique et la transformer en au moins une première information électrique lorsque ladite valeur de pression pneumatique est supérieure ou inférieure à un seuil de pression, en vue de commander ledit au moins un organe d'affichage électronique.

Ledit au moins un organe de déclenchement électropneumatique peut être formé par un manostat électronique configuré pour détecter ledit état serré et ledit état desserré dudit frein de service ou dudit frein de parking.

Ledit au moins un organe de déclenchement électropneumatique peut être formé par deux manostats raccordés chacun à ladite entrée pneumatique, l'un des deux dits manostats étant configuré pour détecter ledit état serré dudit frein de service ou dudit frein de parking et l'autre des deux dits manostats étant configuré pour détecter ledit état desserré dudit frein de service ou dudit frein de parking.

Ledit organe de déclenchement électropneumatique peut être configuré pour transmettre une information électrique représentative dudit état serré ou dudit état desserré dudit frein de service et/ou dudit frein de parking à un panneau de contrôle et de commande dudit système de freinage ferroviaire.

Ledit organe de déclenchement électropneumatique peut être configuré pour recevoir une information pneumatique représentative d'un état d'un dispositif de freinage électromagnétique dudit système de freinage ferroviaire et pour commander ledit organe d'affichage électronique pour afficher ledit état dudit dispositif de freinage électromagnétique, et/ou pour recevoir une information pneumatique représentative d'un état d'un réservoir dudit au moins un agent de pression pneumatique dudit système de freinage ferroviaire et pour commander ledit organe d'affichage électronique pour afficher ledit état dudit réservoir, et/ou pour recevoir une information pneumatique représentative d'un état d'un dispositif d'indication d'usure de freins dudit système de freinage ferroviaire et pour commander ledit organe d'affichage électronique pour afficher ledit état dudit dispositif d'indication d'usure de freins.

Ledit dispositif afficheur peut être pourvu d'un raccord pneumatique disposé sur ladite au moins une entrée pneumatique pour permettre une prise de pression manuelle et/ou d'un connecteur électrique de diagnostic configuré pour permettre la récupération de données électriques.

Ledit dispositif afficheur peut comporter un corps dans lequel est logé ledit au moins organe de déclenchement électropneumatique, avec ladite au moins une entrée pneumatique et ladite au moins une entrée électrique qui débouchent dudit corps et ledit au moins un organe d'affichage électronique qui est au partiellement monté en saillie sur ledit corps.

Ledit dispositif afficheur peut être alimenté électriquement via son entrée électrique par une source d'alimentation électrique dudit système de freinage ferroviaire, ladite source d'alimentation électrique pouvant être au moins partiellement autonome.

Ledit au moins un organe d'affichage électronique peut être pourvu d'une pluralité de diodes électroluminescentes.

Ledit dispositif afficheur peut être configuré pour recevoir une information pneumatique et/ou électrique représentative d'au moins un état parmi un état de continuité électrique du frein de service et/ou du frein de parking, un état d'une conduite principale et/ou un état d'une conduite générale du réseau de conduites pneumatiques, et un état d'isolement dudit frein de service et/ou dudit frein de parking.

Ledit au moins un organe d'affichage électronique peut être pourvu d'une interface graphique configurée pour afficher une information sélectionnée parmi une pluralité d'informations prédéterminées, dont au moins ledit état serré et/ou ledit état desserré dudit frein de service et/ou dudit frein de parking.

Il peut s'agir aussi d'un état de continuité électrique du frein de service et/ou du frein de parking, un état d'une conduite principale et/ou un état d'une conduite générale du réseau de conduites pneumatiques, et un état d'isolement dudit frein de service et/ou dudit frein de parking.

Ledit dispositif afficheur peut être configuré pour recevoir une information pneumatique et/ou électrique représentative d'au moins un des paramètres de vibration, de température et de luminosité environnant ledit frein de service et/ou ledit frein de parking.

Ledit dispositif afficheur peut être configuré pour comptabiliser le nombre d'état serré et/ou d'état desserré dudit frein de service et/ou dudit frein de parking affiché par ledit au moins un organe d'affichage électronique.

L'invention a aussi pour objet, sous un deuxième aspect, un véhicule ferroviaire à freins à au moins une garniture ou à au moins une semelle, comportant au moins un système de freinage ferroviaire tels que décrits ci-dessus et configuré pour agir sur ladite au moins une garniture ou à au moins une semelle dudit véhicule ferroviaire, dans un état dit serré d'un frein de service et/ou d'un frein de parking dudit système.

### Brève description des figures

On va maintenant poursuivre l'exposé de l'invention par la description d'exemples de réalisation, donnée ci-après à titre illustratif et non limitatif, en référence aux dessins annexés.
La figure 1 illustre schématiquement et partiellement un système de freinage ferroviaire pourvu notamment d'un frein de service, d'un frein de parking, d'un réservoir auxiliaire, d'un panneau de contrôle et de commande, d'un poste de commande, et d'un dispositif afficheur d'au moins un état dudit frein de service et/ou dudit frein de parking et/ou dudit réservoir auxiliaire.
La figure 2 représente schématiquement ledit dispositif afficheur et les informations qu'il peut recevoir, afficher, voire transmettre.
La figure 3 est une vue de face d'un dispositif afficheur selon un mode de réalisation.
La figure 4 est une vue en coupe repérée A-A sur la figure 3.
La figure 5 montre en perspective et partiellement en transparence le dispositif afficheur illustré sur les figures 3 et 4.
La figure 6 montre en perspective et partiellement en transparence une variante de réalisation du dispositif afficheur.
La figure 7 est une vue similaire à celle de la figure 6, prise selon un autre angle de vue.

### Description détaillée

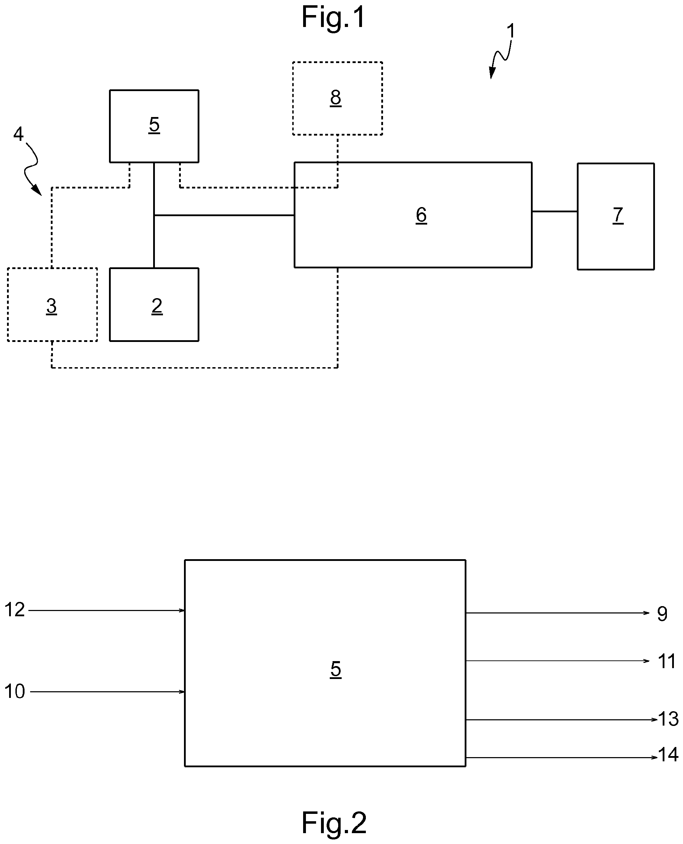

La figure 1 illustre schématiquement et partiellement un système de freinage ferroviaire 1 pour véhicule ferroviaire, pourvu notamment d'un frein de service 2, d'un frein de parking 3, d'un réservoir auxiliaire 8 contenant au moins un agent de pression pneumatique permettant d'alimenter pneumatiquement le frein de service 2 et le frein de parking 3, d'un dispositif afficheur 5 raccordé à chacun des frein de service 2, frein de parking 3 et réservoir auxiliaire 8 via un réseau de conduites pneumatiques 4, un panneau de contrôle et de commande 6 raccordé à chacun des frein de service 2, frein de parking 3, dispositif afficheur 5 et réservoir auxiliaire 8 au moins via le réseau de conduites pneumatiques 4, et d'un poste de commande 7 raccordé au moins au panneau de contrôle et de commande 6.

Le frein de service 2 est configuré pour agir sur des freins à garnitures ou à semelles du véhicule ferroviaire pour immobiliser ce dernier. Le cas échéant, le frein de service 2 est dans un état dit serré. Autrement, le frein de service 2 est dans un état dit desserré.

Le frein de service 2 peut être alimenté pneumatiquement par exemple par le réservoir auxiliaire 8 via le réseau de conduites pneumatiques 4. L'état serré du frein de service 2 peut être obtenu lorsque ce dernier est alimenté et présente une pression de frein de service supérieure à un premier seuil, tandis que l'état desserré du frein de service 2 peut être obtenu lorsque ce dernier est vidangé et/ou présente une pression de frein de service inférieure au premier seuil.

Le frein de parking 3 est aussi configuré pour agir sur les freins à garnitures ou à semelles du véhicule ferroviaire pour immobiliser ce dernier. Le cas échéant, le frein de parking 3 est dans un état dit serré. Autrement, le frein de parking 3 est dans un état dit desserré.

Le frein de parking 3 peut être alimenté pneumatiquement par exemple par le réservoir auxiliaire 8 via le réseau de conduites pneumatiques 4. L'état desserré du parking 3 peut être obtenu lorsque ce dernier est alimenté et présente une pression de frein de parking supérieure à un deuxième seuil, tandis que l'état serré du frein de parking 3 peut être obtenu lorsque ce dernier est vidangé et/ou présente une pression de frein de service inférieure au deuxième seuil.

Le réservoir auxiliaire 8 peut être configuré pour contenir l'agent de pression pneumatique à une valeur de pression au moins supérieure à un troisième seuil, de sorte à être en mesure d'alimenter le frein de service 2 et/ou le frein de parking 3.

Le réservoir auxiliaire 8 peut donc présenter un état dit normal de fonctionnement lorsque la valeur de pression de l'agent de pression pneumatique qu'il contient est au moins supérieure au troisième seuil, et un état dit de défaut de fonctionnement lorsque la valeur de pression de l'agent de pression pneumatique qu'il contient est inférieure au troisième seuil.

Le dispositif afficheur 5 est raccordé via le réseau de conduites pneumatiques 4 directement au frein de service 2 et/ou au frein de parking 3 et/ou au réservoir auxiliaire 8.

Le même principe peut s'appliquer pour des conduites principale et générale du réseau de conduites pneumatique qui courent le long du véhicule ferroviaire, lesquelles sont raccordées ou non au réservoir auxiliaire.

Le dispositif afficheur 5 est configuré pour détecter de manière pneumatique l'état du frein de service 2 et/ou l'état du frein de parking 3 et/ou l'état du réservoir auxiliaire 8, transformer l'information pneumatique d'état en une information électrique d'état, et afficher de manière électronique l'information relative à l'état du frein de service 2 et/ou du frein de parking 3 et/ou du réservoir auxiliaire 8.

Le dispositif afficheur 5 peut aussi être configuré pour détecter ou recevoir une information pneumatique et/ou électrique représentative de l'état de la conduite principale et/ou de la conduite générale.

Une telle information peut être corrélée avec l'information de l'état du frein de service et/ou du frein de parking pour détecter un éventuel défaut.

Le panneau de contrôle et de commande 6 est un dispositif central regroupant au moins des éléments pneumatiques et électriques.

Le panneau de contrôle et de commande 6 est configuré pour envoyer des consignes d'application du frein de service 2 et/ou du frein de parking 3. Il peut s'agir de consignes pneumatiques ou de consignes électriques.

Le panneau de contrôle et de commande 6 est en outre configuré pour commander l'alimentation et/ou la vidange du frein de service 2 et/ou du frein de parking 3 via le réseau de conduites pneumatiques 4 et le réservoir auxiliaire 8, en fonction notamment des consignes d'application du frein de service 2 et/ou du frein de parking 3.

Le panneau de contrôle et de commande 6 peut être configuré pour commander d'autres dispositifs du système de freinage ferroviaire 1, dont par exemple un dispositif de freinage électromagnétique (non représenté) et/ou un dispositif d'indication d'usure des freins.

Le dispositif afficheur 5 peut être configuré pour détecter de manière pneumatique et/ou électrique l'état du dispositif de freinage électromagnétique et/ou du dispositif d'indication d'usure des freins.

Le panneau de contrôle et de commande 6 peut être configuré pour recevoir des informations, notamment électriques, provenant du dispositif afficheur 5 notamment quant à l'état du frein de service 2 et/ou l'état du frein de parking 3 et/ou l'état du réservoir auxiliaire 8, et/ou l'état du dispositif de freinage électromagnétique, et/ou du dispositif d'indication d'usure des freins.

Le poste de commande 7 peut par exemple se trouver dans une locomotive du véhicule ferroviaire et être piloté par un conducteur de ce véhicule.

Le poste de commande 7 peut être configuré pour envoyer des ordres d'application au panneau de contrôle et de commande 6, générant ainsi notamment les consignes d'application du frein de service 2 et/ou du frein de parking 3.

Le poste de commande 7 peut en outre être configuré pour recevoir via le panneau de contrôle et de commande 6, les informations notamment électriques provenant du dispositif afficheur 5 et visant par exemple l'état du frein de service 2 et/ou l'état du frein de parking 3 et/ou l'état du réservoir auxiliaire 8, et/ou l'état du dispositif de freinage électromagnétique.

La figure 2 représente schématiquement le dispositif afficheur 5 et les informations qu'il peut recevoir et celles qu'il peut afficher directement, voire qu'il peut transmettre au panneau de contrôle et de commande 6 et/ou au poste de commande 7, directement ou via le panneau de contrôle et de commande 6.

Le dispositif afficheur 5 est configuré pour recevoir, via au moins une entrée pneumatique 10 prévue sur ce dispositif afficheur 5, une information pneumatique représentative de l'état du frein de service 2 et/ou une information pneumatique représentative de l'état du frein de parking 3.

Le dispositif afficheur 5 peut être configuré pour recevoir une information pneumatique représentative de l'état du réservoir auxiliaire 8 via l'entrée pneumatique 10.

Le dispositif afficheur 5 est configuré pour être alimenté électriquement via au moins une entrée électrique 12 prévue sur ce dispositif afficheur 5.

Le dispositif afficheur 5 peut aussi être configuré pour recevoir, via l'entrée pneumatique 10 ou via l'entrée électrique 12, une information pneumatique ou électrique représentative de l'état du dispositif de freinage électromagnétique et/ou une information pneumatique ou électrique représentative de l'état du dispositif d'indication d'usure des freins.

Le dispositif afficheur 5 est configuré pour afficher, via un premier canal électrique de sortie 9, une information électrique représentative de l'état serré ou de l'état desserré du frein de service 2 et/ou du frein de parking 3.

Le dispositif afficheur peut être configuré pour recevoir et/ou afficher une information pneumatique et/ou électrique représentative d'un état de continuité électrique du frein de service et/ou du frein de parking, et/ou d'un état d'isolement du frein de service et/ou du frein de parking.

On entend par continuité électrique la vérification par exemple que l'état serré du frein de service et/ou du frein de parking s'applique bien le long du véhicule ferroviaire. Ceci peut se faire par exemple par la présence d'un câble électrique courant le long du train et passant par chaque organe de déclenchement et dispositif afficheur associé.

On entend par isolement une inhibition d'un ou plusieurs freins de service et/ou freins de parking, par exemple situés sur un bogie.

Ledit dispositif afficheur peut être configuré pour recevoir une information pneumatique et/ou électrique représentative d'au moins un des paramètres de vibrations, de température et de luminosité environnant le frein de service et/ou le frein de parking. Ceci peut permettre par exemple de donner une information relative à la maintenance soit du frein de service et/ou du frein de parking par exemple si le niveau de vibrations a dépassé un seuil prédéterminé, si la température a dépassé un seuil prédéterminé, soit d'un élément environnant comme par exemple les rails si le niveau de vibrations à dépasser un seuil prédéterminé.

Le paramètre relatif à la luminosité environnante peut permettre d'ajuster le niveau d'éclairage du dispositif afficheur.

Ces paramètres de vibrations, température et luminosité peuvent être obtenus par exemple par des accéléromètre, thermocouple et capteur qui sont intégrés à l'organe de déclenchement électropneumatique ou bien qui sont déportés.

Le dispositif afficheur 5 peut être configuré pour afficher, via le canal électrique de sortie 9, une information électrique représentative de l'état du réservoir auxiliaire 8 et/ou du dispositif de freinage électromagnétique et/ou du dispositif d'indication d'usure des freins.

Le dispositif afficheur 5 peut être configuré pour transmettre, via un deuxième canal électrique de sortie 11, une information électrique représentative au moins de l'état serré ou de l'état desserré du frein de service 2 et/ou du frein de parking 3 au panneau de contrôle et de commande 6 et/ou au poste de commande 7, directement ou via le panneau de contrôle et de commande 6.

Le dispositif afficheur 5 est pourvu d'un raccord pneumatique 13 qui peut être raccordé directement à l'entrée pneumatique 10 et qui permet à un opérateur de prendre manuellement la pression pneumatique présente au niveau de l'entrée pneumatique 10.

Le dispositif afficheur 5 peut aussi être configuré pour afficher, via un canal électronique de sortie 14, des informations représentatives par exemple de valeurs de pressions dans le frein de service 2 et/ou dans le frein de parking 3 et/ou dans le réservoir auxiliaire 8, de nombre de cycles de freinage de service et/ou de freinage de parking, etc.

Le dispositif afficheur peut être configuré pour comptabiliser et afficher le nombre de de cycles de freinage de service et/ou de freinage de parking, autrement dit le nombre d'état serré et/ou d'état desserré du frein de service et/ou du frein de parking affiché par l'organe d'affichage électronique. Ceci peut permettre par exemple de donner une information relative à la maintenance du frein de service et/ou du frein de parking, et notamment de remplacement des garnitures. Ces informations peuvent corrélées avec les paramètres de vibration, de température et de luminosité.

Le dispositif afficheur peut être pourvu d'un connecteur électrique de diagnostic configuré pour permettre la récupération de données électriques.

L'organe d'affichage électronique peut être pourvu d'une interface graphique configurée pour afficher une information sélectionnée parmi une pluralité d'informations prédéterminées, dont un état de continuité électrique du frein de service et/ou du frein de parking, un état d'une conduite principale et/ou un état d'une conduite générale du réseau de conduites pneumatiques, et un état d'isolement du frein de parking et/ou du frein de parking, des informations relatives aux paramètre de vibrations, température et/ou luminosité ; voire aussi des alertes ou des informations découlant des informations susvisées.

Toutes ces informations peuvent être envoyées depuis l'organe d'affichage électronique vers le panneau de contrôle et de commande et/ou vers le poste de commande.

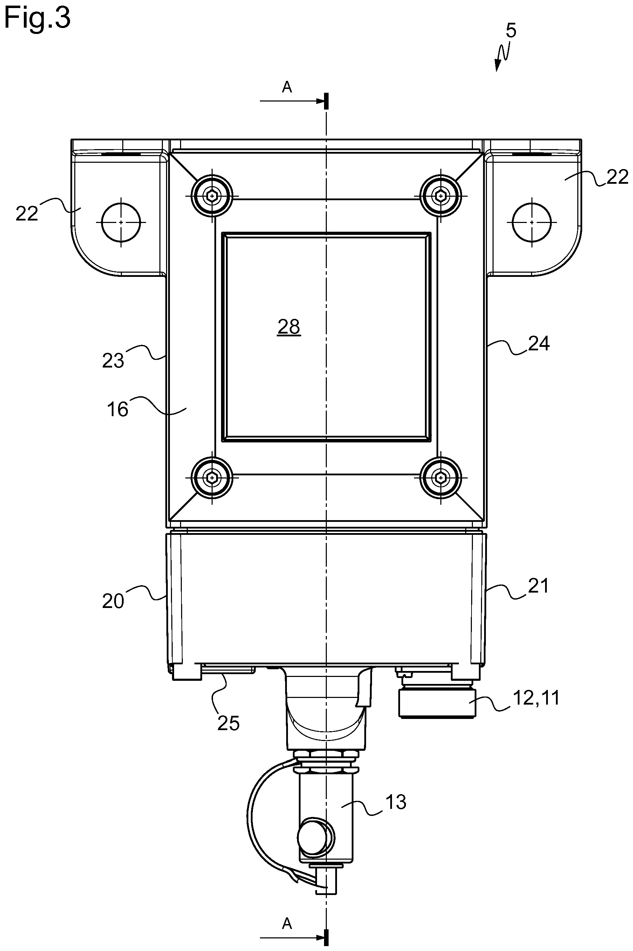

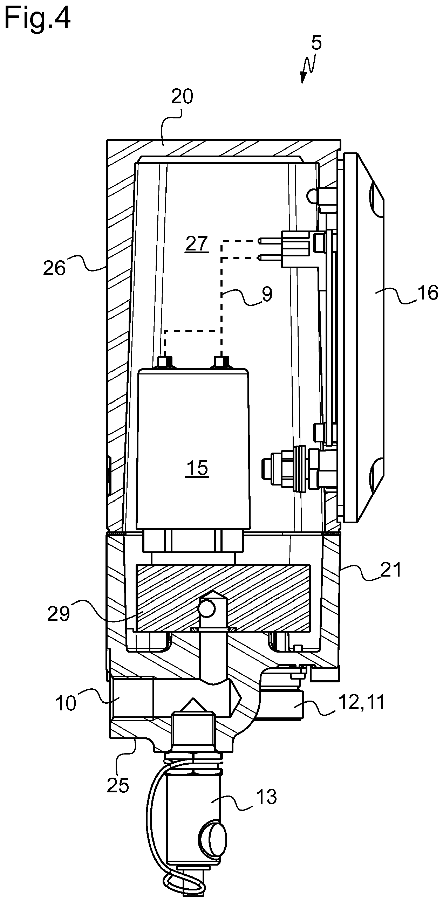

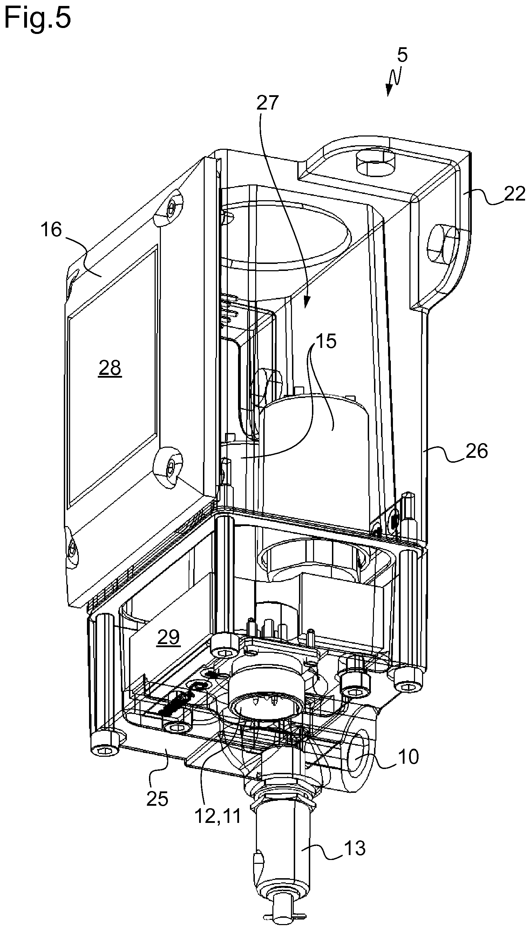

On va maintenant décrire plus en détail, en référence aux figures 3 à 5, un mode de réalisation du dispositif afficheur 5.

Un tel dispositif afficheur 5 est par exemple prévu pour être assujetti mécaniquement sur le côté d'un wagon du véhicule ferroviaire, de sorte par exemple à faciliter la prise de connaissance par un opérateur des informations affichées par ce dispositif afficheur 5. Ceci est particulièrement commode notamment lorsque le véhicule est à quai, par exemple en vue d'opérations de maintenance ou bien avant un cycle de déplacement.

Le dispositif afficheur 5 peut comporter un corps 20 globalement parallélépipédique, présentant une face avant 21 duquel saille au moins partiellement un organe d'affichage électronique 16 de ce dispositif afficheur 5.

L'organe d'affichage électronique 16 est ici pourvu d'un écran à diodes électroluminescentes 28.

L'organe d'affichage électronique 16 peut en outre être pourvu d'une interface graphique configurée pour afficher une information sélectionnée parmi une pluralité d'informations prédéterminées, dont au moins l'état serré et/ou l'état desserré par exemple du frein de service 2.

Le dispositif afficheur 5 peut être pourvu d'oreilles de fixation 22 s'étendant depuis des côtés opposés 23 et 24 du corps 20 et prévues pour son assujettissement par exemple au wagon.

Le corps 20 du dispositif afficheur 5 est ici pourvu d'une face inférieure 25 de laquelle saille le raccord pneumatique 13 pour la prise de pression manuelle par un opérateur.

L'entrée pneumatique 10 saille ici également depuis cette face inférieure 25 et s'étend vers une face arrière 26 où elle débouche, laquelle face arrière 26 est opposée à la face avant 21.

Au niveau de la face inférieure 25 du corps 20 débouche en outre l'entrée électrique 12, formée ici par exemple par un connecteur à broches multiples.

Le dispositif afficheur 5 comporte des organes de déclenchement électropneumatique 15 qui sont logés dans un espace interne 27 délimité par le corps 20.

Dans l'exemple décrit, les organes de déclenchement électropneumatique 15 sont au nombre de deux et sont formés par des manostats.

Un des deux manostats 15 est dit à seuil inférieur et l'autre des manostats 15 est dit à seuil supérieur (voir ci-après).

Les deux manostats 15 sont ici configurés pour détecter l'état du frein de service 2.

Les deux manostats 15 sont ici raccordés à l'entrée pneumatique 10 par l'intermédiaire d'un répartiteur 29 en communication pneumatique avec l'entrée pneumatique 10 et avec les deux manostats 15, ainsi qu'à l'entrée électrique 12.

Dans l'exemple décrit, les manostats 15 sont alimentés électriquement par une source électrique du système de freinage qui peut notamment transiter via le panneau de contrôle et de commande 6.

En variante, il pourrait s'agir d'un source électrique autonome par exemple directement monté sur le corps 20 du dispositif afficheur 5 ou monté à proximité de ce dernier.

Les deux manostats 15 sont en outre ici raccordés à l'organe d'affichage électronique 16 et sont configurés pour commander cet organe d'affichage électronique 16 pour afficher l'état serré ou l'état desserré du frein de service 2.

Le manostat 15 dit à seuil supérieur est ici configuré pour détecter que la valeur de pression pneumatique dans le frein de service 2 est supérieure au premier seuil, indiquant alors que le frein de service 2 est dans l'état serré.

Le manostat 15 dit à seuil inférieur est quant à lui configuré pour détecter que la valeur de pression pneumatique dans le frein de service 2 est inférieure au premier seuil, indiquant alors que le frein de service 2 est dans l'état desserré.

Les manostats 15 sont configurés pour transformer l'information reçue en une première information électrique représentative de l'état serré ou desserré du frein de service 3, et pour transmettre cette première information électrique, via le premier canal électrique de sortie 9, à l'organe d'affichage électronique 16 en vue de commander l'information affichée par ce dernier.

En variante, les manostats 15 sont configurés pour détecter l'état du frein de parking 3. En particulier, le manostat dit à seuil supérieur est configuré pour détecter que la valeur de pression pneumatique dans le frein de parking est supérieure au deuxième seuil, indiquant alors que le frein de parking est dans l'état desserré ; tandis que le manostat dit à seuil inférieur est quant à lui configuré pour détecter que la valeur de pression pneumatique dans le frein de parking est inférieure au deuxième seuil, indiquant alors que le frein de parking est dans l'état serré.

Les manostats 15 sont en outre configurés pour transmettre cette première information électrique, via le deuxième canal électrique de sortie 11, au panneau de contrôle et de commande 6 et/ou au poste de commande 7, directement ou via le panneau de contrôle et de commande 6.

On notera que le deuxième canal électrique de sortie 11 est ici formé en commun avec le connecteur à broches multiples de l'entrée électrique 12.

En variante, il pourrait s'agir d'un connecteur distinct.

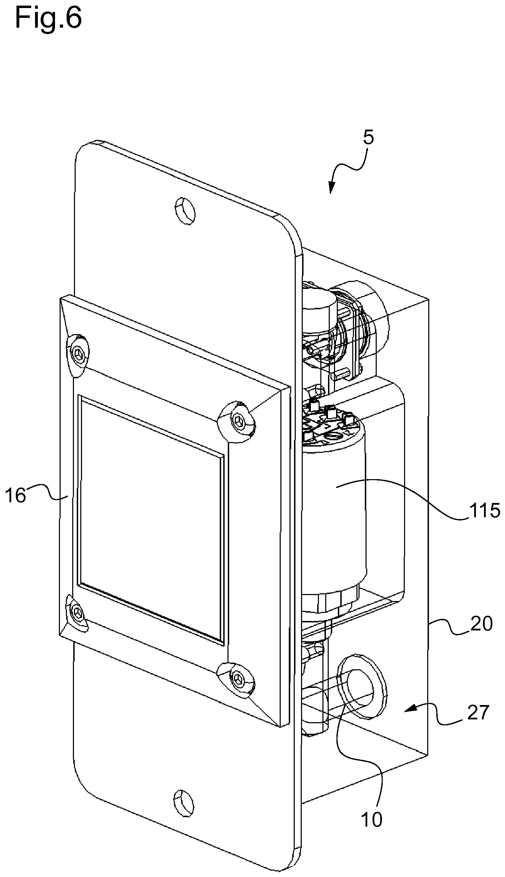

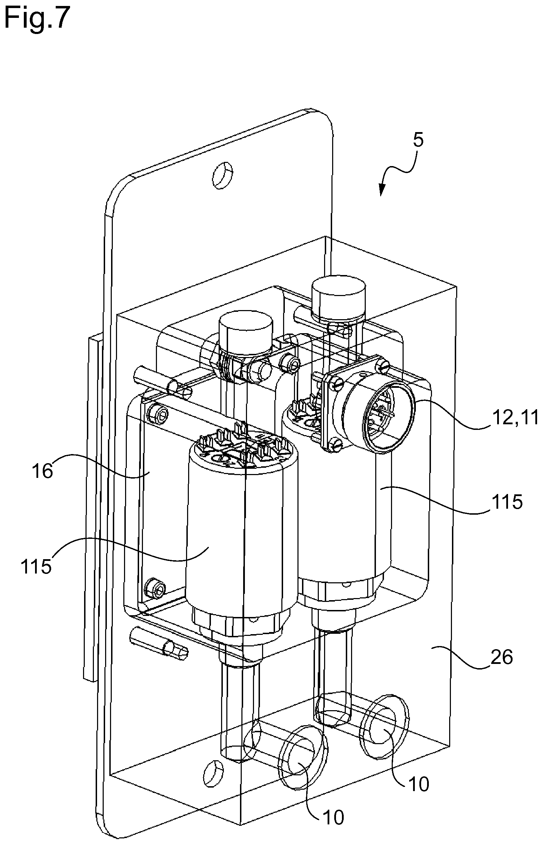

On va maintenant décrire, en référence aux figures 6 et 7, une variante de réalisation du dispositif afficheur illustré sur les figures 3 à 5.

Le dispositif afficheur 5 illustré sur les figures 6 et 7 diffère en ce qu'il est configuré pour détecter et afficher l'état du frein de parking 3 et l'état du réservoir auxiliaire 8, plutôt que l'état du frein de service.

En particulier, le dispositif afficheur 5 est pourvu de deux organes de déclenchement électropneumatique formés chacun par un manostat électronique 115.

Ces manostats électroniques 115 sont logés dans l'espace interne 27 du corps 20 du dispositif afficheur 5 et sont raccordés chacun directement à une entrée pneumatique 10 dédiée.

Les entrées pneumatiques 10 peuvent par exemple déboucher sur la face arrière 26 du corps 20. L'entrée électrique 12 peut aussi déboucher sur la face arrière 26 du corps 20.

Les deux manostats électroniques 115 sont en outre ici raccordés à l'organe d'affichage électronique 16 et sont configurés pour commander cet organe d'affichage électronique 16 pour afficher via le premier canal électrique de sortie 9, l'état serré ou l'état desserré du frein de parking 2 et l'état normal de fonctionnement ou l'état de défaut de fonctionnement du réservoir auxiliaire 8.

En d'autres termes, un des manostats électroniques 115 est configuré pour détecter si la valeur de pression pneumatique dans le frein de parking est inférieure ou supérieure au deuxième seuil, indiquant alors respectivement que le frein de parking est dans l'état serré ou dans l'état desserré.

L'autre des manostats électroniques 115 est configuré pour détecter si la valeur de pression de l'agent de pression pneumatique que le réservoir auxiliaire 8 contient est supérieure ou inférieure au troisième seuil, indiquant alors respectivement que le réservoir auxiliaire 8 est dans un état normal de fonctionnement ou dans un état de défaut de fonctionnement.

Les manostats 115 peuvent aussi être configurés pour transmettre les informations électriques relatives à l'état du frein de parking et à l'état du réservoir auxiliaire, via le deuxième canal électrique de sortie 11, au panneau de contrôle et de commande 6 et/ou au poste de commande 7, directement ou via le panneau de contrôle et de commande 6.

On notera que le deuxième canal électrique de sortie 11 est ici formé en commun avec le connecteur à broches multiples de l'entrée électrique 12.

Des variantes non illustrées sont présentées ci-dessous.

Le dispositif d'affichage peut comporter plus ou moins d'organe de déclenchement électropneumatiques, du type manostat ou manostat électrique, de sorte qu'il peut détecter et afficher, voire transmettre, au moins une information sélectionnée parmi une pluralité d'informations prédéterminées, dont au moins l'état serré ou desserré du frein de service, l'état serré ou desserré du frein de parking et l'état du réservoir auxiliaire, voire aussi l'état du dispositif de freinage électromagnétique, l'état du dispositif d'indication d'usure de frein, les valeurs de pressions dans le frein de service et/ou dans le frein de parking et/ou dans le réservoir auxiliaire, le nombre de cycles de freinage de service et/ou de freinage de parking, etc.

Les manostats peuvent être remplacés par exemple par des capteurs de pression associés à une unité électronique de l'organe d'affichage électronique ou à un boîtier électronique distinct logé dans le corps.

Le dispositif d'affichage peut présenter un corps ayant une forme différente d'une forme globalement parallélépipédique.

Le dispositif d'affichage peut être au moins partiellement encastré dans le wagon.

Plus généralement, l'invention ne se limite pas aux exemples décrits et représentés.

## Revendications

1. Système de freinage ferroviaire comportant un frein de service (2) et/ou un frein de parking (3), un réseau de conduites pneumatiques (4) prévu pour alimenter, via au moins un agent de pression pneumatique, ledit frein de service et/ou ledit frein de parking pour les mettre dans un état dit serré ou dans un état dit desserré, et un dispositif afficheur (5) dudit état serré et/ou dudit état desserré dudit frein de service et/ou dudit frein de parking ; **caractérisé en ce que** ledit dispositif afficheur comporte au moins une entrée pneumatique (10) raccordée audit frein de service et/ou audit frein de parking via ledit réseau de conduites pneumatiques (4), au moins une entrée électrique (12), au moins un organe de déclenchement électropneumatique (15, 115) raccordé à ladite au moins une entrée pneumatique et à ladite au moins une entrée électrique, et au moins un organe d'affichage électronique (16) raccordé audit organe de déclenchement électropneumatique et commandé par ce dernier pour afficher ledit état serré ou ledit état desserré dudit frein de service et/ou dudit frein de parking.

2. Système de freinage ferroviaire selon la revendication 1, **caractérisé en ce que** ledit au moins un organe de déclenchement électropneumatique (15, 115) est configuré pour recevoir une information représentative d'une valeur de pression pneumatique via ladite au moins une entrée pneumatique (10) et la transformer en au moins une première information électrique (9) lorsque ladite valeur de pression pneumatique est supérieure ou inférieure à un seuil de pression, en vue de commander ledit au moins un organe d'affichage électronique (16).

3. Système de freinage ferroviaire selon la revendication 2, **caractérisé en ce que** ledit au moins un organe de déclenchement électropneumatique (115) est formé par un manostat électronique configuré pour détecter ledit état serré et ledit état desserré dudit frein de service ou dudit frein de parking.

4. Système de freinage ferroviaire selon la revendication 2, **caractérisé en ce que** ledit au moins un organe de déclenchement électropneumatique (15) est formé par deux manostats raccordés chacun à ladite entrée pneumatique (10), l'un des deux dits manostats étant configuré pour détecter ledit état serré dudit frein de service ou dudit frein de parking et l'autre des deux dits manostats étant configuré pour détecter ledit état desserré dudit frein de service ou dudit frein de parking.

5. Système de freinage ferroviaire selon l'une quelconque des revendications 1 à 4, **caractérisé en ce que** ledit organe de déclenchement électropneumatique (15, 115) est configuré pour transmettre une information électrique (11) représentative dudit état serré ou dudit état desserré dudit frein de service et/ou dudit frein de parking à un panneau de contrôle et de commande (6, 7) dudit système de freinage ferroviaire (1).

6. Système de freinage ferroviaire selon l'une quelconque des revendications 1 à 5, **caractérisé en ce que** ledit organe de déclenchement électropneumatique (15, 115) est configuré pour recevoir une information pneumatique représentative d'un état d'un dispositif de freinage électromagnétique dudit système de freinage ferroviaire (1) et pour commander ledit organe d'affichage électronique (16) pour afficher ledit état dudit dispositif de freinage électromagnétique, et/ou pour recevoir une information pneumatique représentative d'un état d'un réservoir (8) dudit au moins un agent de pression pneumatique dudit système de freinage ferroviaire et pour commander ledit organe d'affichage électronique pour afficher ledit état dudit réservoir et/ou pour recevoir une information pneumatique représentative d'un état d'un dispositif d'indication d'usure de freins dudit système de freinage ferroviaire et pour commander ledit organe d'affichage électronique pour afficher ledit état dudit dispositif d'indication d'usure des freins.

7. Système de freinage ferroviaire selon l'une quelconque des revendications 1 à 6, **caractérisé en ce que** ledit dispositif afficheur (5) est pourvu d'un raccord pneumatique disposé sur ladite au moins une entrée pneumatique (10) pour permettre une prise de pression manuelle (13) et/ou d'un connecteur électrique de diagnostic configuré pour permettre la récupération de données électriques.

8. Système de freinage ferroviaire selon l'une quelconque des revendications 1 à 7, **caractérisé en ce que** ledit dispositif afficheur (5) comporte un corps (20) dans lequel est logé ledit au moins organe de déclenchement électropneumatique (15, 115), avec ladite au moins une entrée pneumatique (10) et ladite au moins une entrée électrique (12) qui débouchent dudit corps et ledit au moins un organe d'affichage électronique qui est au partiellement monté en saillie sur ledit corps.

9. Système de freinage ferroviaire selon l'une quelconque des revendications 1 à 8, **caractérisé en ce que** ledit dispositif afficheur (5) est alimenté électriquement via son entrée électrique (12) par une source d'alimentation électrique dudit système de freinage ferroviaire, ladite source d'alimentation électrique étant au moins partiellement autonome.

10. Système de freinage ferroviaire selon l'une quelconque des revendications 1 à 9, **caractérisé en ce que** ledit au moins un organe d'affichage électronique (16) est pourvu d'une pluralité de diodes électroluminescentes.

11. Système de freinage ferroviaire selon l'une quelconque des revendications 1 à 10, **caractérisé en ce que** ledit dispositif afficheur est configuré pour recevoir une information pneumatique et/ou électrique représentative d'au moins un état parmi un état de continuité électrique du frein de service et/ou du frein de parking, un état d'une conduite principale et/ou un état d'une conduite générale du réseau de conduites pneumatiques, et un état d'isolement dudit frein de service et/ou dudit frein de parking.

12. Système de freinage ferroviaire selon l'une quelconque des revendications 1 à 11, **caractérisé en ce que** ledit au moins un organe d'affichage électronique (16) est pourvu d'une interface graphique configurée pour afficher une information sélectionnée parmi une pluralité d'informations prédéterminées, dont au moins ledit état serré et/ou ledit état desserré dudit frein de service et/ou dudit frein de parking.

13. Système de freinage ferroviaire selon l'une quelconque des revendications 1 à 12, **caractérisé en ce que** ledit dispositif afficheur est configuré pour recevoir une information pneumatique et/ou électrique représentative d'au moins un des paramètres de vibration, de température et de luminosité environnant ledit frein de service et/ou ledit frein de parking.

14. Système de freinage ferroviaire selon l'une quelconque des revendications 1 à 14, **caractérisé en ce que** ledit dispositif afficheur est configuré pour comptabiliser le nombre d'état serré et/ou d'état desserré dudit frein de service et/ou dudit frein de parking affiché par ledit au moins un organe d'affichage électronique.

15. Véhicule ferroviaire à freins à au moins une garniture ou à au moins une semelle, comportant au moins un système de freinage ferroviaire (1) selon l'une quelconque des revendications 1 à 14, qui est configuré pour agir sur ladite au moins une garniture ou à au moins une semelle dudit véhicule ferroviaire dans un état dit serré d'un frein de service et/ou d'un frein de parking dudit système.

## Patentansprüche

1. Eisenbahnbremssystem, das eine Betriebsbremse (2) und/oder eine Feststellbremse (3), ein pneumatisches Leitungsnetz (4), das vorgesehen ist, um über mindestens ein pneumatisches Druckmittel die Betriebsbremse und/oder die Feststellbremse zu versorgen, um sie in einen sogenannten eingefallenen Zustand oder in einen sogenannten gelösten Zustand zu versetzen, und eine Anzeigevorrichtung (5) des eingefallenen Zustandes und/oder gelösten Zustandes der Betriebsbremse und/oder der Feststellbremse beinhaltet;
**dadurch gekennzeichnet, dass** die Anzeigevorrichtung mindestens einen pneumatischen Eingang (10), der über das pneumatische Leitungsnetz (4) an die Betriebsbremse und/oder die Feststellbremse angeschlossen ist, mindestens einen elektrischen Eingang (12), mindestens ein elektropneumatisches Auslöseorgan (15, 115), das an den mindestens einen pneumatischen Eingang und an den mindestens einen elektrischen Eingang angeschlossen ist, und mindestens ein elektronisches Anzeigeorgan (16), das an das elektropneumatische Auslöseorgan angeschlossen ist, und durch dieses letztere gesteuert wird, beinhaltet, um den eingefallenen Zustand oder den gelösten Zustand der Betriebsbremse und/oder der Feststellbremse anzuzeigen.

2. Eisenbahnbremssystem nach Anspruch 1, **dadurch gekennzeichnet, dass** das mindestens eine elektropneumatische Auslöseorgan (15, 115) konfiguriert ist, um eine Information repräsentativ für einen pneumatischen Druckwert über den mindestens einen pneumatischen Eingang (10) zu empfangen, und ihn in mindestens eine erste elektrische Information (9) umzuwandeln, wenn der pneumatische Druckwert größer oder kleiner als eine Druckschwelle ist, um das mindestens eine elektronische Anzeigeorgan (16) zu steuern.

3. Eisenbahnbremssystem nach Anspruch 2, **dadurch gekennzeichnet, dass** das mindestens eine elektropneumatische Auslöseorgan (115) durch einen elektronischen Druckwächter gebildet wird, der konfiguriert ist, um den eingefallenen Zustand und den gelösten Zustand der Betriebsbremse oder der Feststellbremse zu erkennen.

4. Eisenbahnbremssystem nach Anspruch 2, **dadurch gekennzeichnet, dass** das mindestens eine elektropneumatische Auslöseorgan (15) durch zwei Druckwächter gebildet wird, die jeweils an den pneumatischen Eingang (10) angeschlossen sind, wobei der eine der beiden Druckwächter konfiguriert ist, um den eingefallenen Zustand der Betriebsbremse oder der Feststellbremse zu erkennen, und der andere der beiden Druckwächter konfiguriert ist, um den gelösten Zustand der Betriebsbremse oder der Feststellbremse zu erkennen.

5. Eisenbahnbremssystem nach einem der Ansprüche 1 bis 4, **dadurch gekennzeichnet, dass** das elektropneumatische Auslöseorgan (15, 115) konfiguriert ist, um eine elektrische Information (11) repräsentativ für den eingefallenen Zustand oder den gelösten Zustand der Betriebsbremse und/oder der Feststellbremse auf eine Kontroll- und Schalttafel (6, 7) des Eisenbahnbremssystems (1) zu übertragen.

6. Eisenbahnbremssystem nach einem der Ansprüche 1 bis 5, **dadurch gekennzeichnet, dass** das elektropneumatische Auslöseorgan (15, 115) konfiguriert ist, um eine pneumatische Information repräsentativ für einen Zustand einer elektromagnetischen Bremsvorrichtung des Eisenbahnbremssystems (1) zu empfangen, und um das elektronische Anzeigeorgan (16) zu steuern, um den Zustand der elektromagnetischen Bremsvorrichtung anzuzeigen, und/oder um eine pneumatische Information repräsentativ für einen Zustand eines Behälters (8) des mindestens einen pneumatischen Druckmittels des Eisenbahnbremssystems zu empfangen, und um das elektronische Anzeigeorgan zu steuern, um den Zustand des Behälters anzuzeigen, und/oder um eine pneumatische Information repräsentativ für einen Zustand einer Verschleißanzeigevorrichtung von Bremsen des Eisenbahnbremssystems zu empfangen, und um das elektronische Anzeigeorgan zu steuern, um den Zustand der Verschleißanzeigevorrichtung der Bremsen anzuzeigen.

7. Eisenbahnbremssystem nach einem der Ansprüche 1 bis 6, **dadurch gekennzeichnet, dass** die Anzeigevorrichtung (5) mit einem pneumatischen Anschluss versehen ist, der auf dem mindestens einen pneumatischen Eingang (10) angeordnet ist, um eine manuelle Druckaufnahme (13) zu ermöglichen, und/oder mit einem elektrischen Diagnosestecker, der konfiguriert ist, um die Gewinnung elektrischer Daten zu ermöglichen.

8. Eisenbahnbremssystem nach einem der Ansprüche 1 bis 7, **dadurch gekennzeichnet, dass** die Anzeigevorrichtung (5) einen Körper (20) beinhaltet, in dem das mindestens eine elektropneumatische Auslöseorgan (15, 115) mit dem mindestens einen pneumatischen Eingang (10) und dem mindestens einen elektrischen Eingang (12) aufgenommen ist, die aus dem Körper und dem mindestens einen elektronischen Anzeigeorgan münden, welches teilweise hervorstehend auf dem Körper montiert ist.

9. Eisenbahnbremssystem nach einem der Ansprüche 1 bis 8, **dadurch gekennzeichnet, dass** die Anzeigevorrichtung (5) elektrisch über ihren elektrischen Eingang (12) durch eine Stromversorgungsquelle des Eisenbahnbremssystems mit Strom versorgt wird, wobei die Stromversorgungsquelle mindestens teilweise autonom ist.

10. Eisenbahnbremssystem nach einem der Ansprüche 1 bis 9, **dadurch gekennzeichnet, dass** das mindestens eine elektronische Anzeigeorgan (16) mit einer Vielzahl von Leuchtdioden versehen ist.

11. Eisenbahnbremssystem nach einem der Ansprüche 1 bis 10, **dadurch gekennzeichnet, dass** die Anzeigevorrichtung konfiguriert ist, um eine pneumatische und/oder elektrische Information repräsentativ für mindestens einen Zustand aus einem Zustand elektrischer Durchgängigkeit der Betriebsbremse und/oder Feststellbremse, einem Zustand einer Hauptleitung und/oder einem allgemeinen Zustand des pneumatischen Leitungsnetzes, und einem Isolierungszustand der Betriebsbremse und/oder der Feststellbremse zu empfangen.

12. Eisenbahnbremssystem nach einem der Ansprüche 1 bis 11, **dadurch gekennzeichnet, dass** das mindestens eine elektronische Anzeigeorgan (16) mit einer grafischen Schnittstelle versehen ist, die konfiguriert ist, um eine Information anzuzeigen, die aus einer Vielzahl von vorbestimmten Informationen, darunter mindestens den eingefallenen Zustand und/oder den gelösten Zustand der Betriebsbremse und/oder der Feststellbremse anzuzeigen.

13. Eisenbahnbremssystem nach einem der Ansprüche 1 bis 12, **dadurch gekennzeichnet, dass** die Anzeigevorrichtung konfiguriert ist, um eine pneumatische und/oder elektrische Information repräsentativ für mindestens einen der Schwingungs-, Temperatur- und Helligkeitsparameter zu empfangen, welche die Betriebsbremse und/oder die Feststellbremse umgeben.

14. Eisenbahnbremssystem nach einem der Ansprüche 1 bis 14, **dadurch gekennzeichnet, dass** die Anzeigevorrichtung konfiguriert ist, um sie Anzahl eines eingefallenen Zustands und/oder gelösten Zustands der Betriebsbremse und/oder der Feststellbremse, der von dem mindestens einen elektronischen Anzeigeorgan angezeigt wird, zu registrieren.

15. Schienenfahrzeug mit Bremsen mit mindestens einem Belag oder mindestens einer Sohle, mindestens ein Eisenbahnbremssystem (1) nach einem der Ansprüche 1 bis 14 beinhaltend, das konfiguriert ist, um auf den mindestens einen Belag oder mindestens eine Sohle des Schienenfahrzeugs in einem sogenannten eingefallenen Zustand einer Betriebsbremse und/oder einer Feststellbremse des Systems zu wirken.

## Claims

1. Rail vehicle braking system comprising a service brake (2) and/or a parking brake (3), a network of pneumatic pipes (4) provided for supplying, via at least one pneumatic pressure agent, said service brake and/or said parking brake to place them in what is referred to as an engaged state or in what is referred to as a disengaged state, and a display device (5) for displaying said engaged state and/or said disengaged state of said service brake and/or of said parking brake; **characterized in that** said display device comprises at least one pneumatic intake (10) connected to said service brake and/or to said parking brake via said network of pneumatic pipes (4), at least one electrical input (12), at least one electro-pneumatic triggering member (15, 115) connected to said at least one pneumatic intake and to said at least one electrical input, and at least one electronic display member (16) connected to said electro-pneumatic triggering member and controlled by the latter to display said engaged state or said disengaged state of said service brake and/or of said parking brake.

2. Rail vehicle braking system according to claim 1, **characterized in that** said at least one electro-pneumatic triggering member (15, 115) is configured to receive an item of information representing a pneumatic pressure value via said at least one pneumatic intake (10) and transform it into at least one first item of electrical information (9) when said pneumatic pressure value is greater than or less than a pressure threshold, for the purpose of controlling said at least one electronic display member (16).

3. Rail vehicle braking system according to claim 2, **characterized in that** said at least one electro-pneumatic triggering member (115) is formed by an electronic pressure switch configured to detect said engaged state and said disengaged state of said service brake or of said parking brake.

4. Rail vehicle braking system according to claim 2, **characterized in that** said at least one electro-pneumatic triggering member (15) is formed by two pressure switches each connected to said pneumatic intake (10), one of the two said pressure switches being configured to detect said engaged state of said service brake or of said parking brake and the other of the two said pressure switches being configured to detect said disengaged state of said service brake or of said parking brake.

5. Rail vehicle braking system according to any one of claims 1 to 4, **characterized in that** said electro-pneumatic triggering member (15, 115) is configured to transmit an item of electrical information (11) representing said engaged state or said disengaged state of said service brake and/or of said parking brake to a control and activation panel (6, 7) of said rail vehicle braking system.

6. Rail vehicle braking system according to any one of claims 1 to 5, **characterized in that** said electro-pneumatic triggering member (15, 115) may be configured to receive an item of pneumatic information representing a state of an electromagnetic braking device of said rail vehicle braking system (1) and to control said electronic display member (16) to display said state of said electromagnetic braking device, and/or to receive an item of pneumatic information representing a state of a reservoir (8) of said at least one pneumatic pressure agent of said rail vehicle braking system and to control said electronic display member to display said state of said reservoir and/or to receive an item of pneumatic information representing a state of a brake wear indicator device of said rail vehicle braking system and to control said electronic display member to display said state of said wear indicator device of the brakes.

7. Rail vehicle braking system according to any one of claims 1 to 6, **characterized in that** said display device (5) is provided with a pneumatic connector disposed on said at least one pneumatic intake (10) to enable manual pressure measurement (13) and/or with an electrical connector for diagnostics configured to enable the retrieval of electrical data.

8. Rail vehicle braking system according to any one of claims 1 to 7, **characterized in that** said display device (5) may comprise a body (20) in which is housed said at least one electro-pneumatic triggering member (15, 115), said at least one pneumatic intake (10) and said at least one electrical input (12) emerging from said body (5) and said at least one electronic display member being at least partially mounted projecting from said body.

9. Rail vehicle braking system according to any one of claims 1 to 8, **characterized in that** said display device (5) is electrically supplied via its electrical input (12) by a source of electrical supply of said rail vehicle braking system, said source of electrical supply being at least partially autonomous.

10. Rail vehicle braking system according to any one of claims 1 to 9, **characterized in that** said at least one electronic display member (16) is provided with a plurality of light-emitting diodes.

11. Rail vehicle braking system according to any one of claims 1 to 10, **characterized in that** said display device is configured to receive an item of pneumatic and/or electrical information representing at least one state from among a state of electrical continuity of the service brake and/or of the parking brake, a state of a main pipe and/or a state of a general pipe of the network of pneumatic pipes, and a state of isolation of said service brake and/or of said parking brake.

12. Rail vehicle braking system according to any one of claims 1 to 11, **characterized in that** said at least one electronic display member (16) is provided with a graphical interface configured to display an item of information selected from a plurality of predetermined items of information, including at least said engaged state and/or said disengaged state of said service brake and/or of said parking brake.

13. Rail vehicle braking system according to any one of claims 1 to 12, **characterized in that** said display device is configured to receive an item of pneumatic and/or electrical information representing at least one of the parameters of vibration, of temperature and of luminosity in surroundings of said service brake and/or of said parking brake.

14. Rail vehicle braking system according to any one of claims 1 to 14, **characterized in that** said display device is configured to register the number of engaged states and/or disengaged states of said service brake and/or of said parking brake displayed by said at least one electronic display member.

15. Rail vehicle having brakes with at least one lining or with at least one block, comprising at least one rail vehicle braking system (1) according to any one of claims 1 to 14, which is configured to act on said at least one lining or at said at least one block of said rail vehicle in what is referred to as an engaged state of a service brake and/or of a parking brake of said system.
